Europäisches Patentamt

**European Patent Office**

**Office européen des brevets**

(11) Numéro de publication: **0 266 830 B1**

(12) **FASCICULE DE BREVET EUROPEEN**

(45) Date de publication de fascicule du brevet: **29.07.92**

(51) Int. Cl.⁵: **C01D 7/16**, C07C 209/82

(21) Numéro de dépôt: **87202053.2**

(22) Date de dépôt: **27.10.87**

(54) **Procédé pour l'extraction d'un liquide organique comprenant une base organique azotée, hors d'un brouet aqueux de particules de matière minérale et procédé pour la production de bicarbonate de métal alcalin.**

(30) Priorité: **05.11.86 FR 8615526**

(43) Date de publication de la demande:
**11.05.88 Bulletin 88/19**

(45) Mention de la délivrance du brevet:
**29.07.92 Bulletin 92/31**

(84) Etats contractants désignés:
**AT BE CH DE ES FR GB GR IT LI LU NL SE**

(56) Documents cités:
**EP-A- 0 148 524**
**EP-A- 0 171 106**
**GB-A- 1 082 436**

**Kirk-Othmer, Encyclopedia of Chemical Technology, vol.1, page 547 (1978)**

**Kirk-Othmer, Encyclopedia of Chemical Technology, vol. 21, pages 544-545 (1978)**

(73) Titulaire: **SOLVAY**
**Rue du Prince Albert, 33**
**B-1050 Bruxelles(BE)**

(72) Inventeur: **Ninane, Léon**
**Rue Laennec, 1**
**F-54110 Dombasle-sur-Meurthe(FR)**
Inventeur: **Breton, Claude**
**Rue Pierre Breton, 5**
**F-54110 Dombasle-sur-Meurthe(FR)**

(74) Mandataire: **Anthoine, Paul et al**
**SOLVAY Département de la Propriété Indus-**
**trielle 310, rue de Ransbeek**
**B-1120 Bruxelles(BE)**

Rank Xerox (UK) Business Services

## Description

La présente invention est relative à un procédé pour extraire hors d'un brouet aqueux de particules de matière minérale, une base organique azotée insoluble dans l'eau, telle qu'une amine par exemple.

On connaît une technique pour la fabrication de bicarbonate de sodium selon laquelle on mélange une solution aqueuse de chlorure de sodium et une solution organique d'une amine insoluble dans l'eau, on traite le mélange résultant avec un gaz contenant de l'anhydride carbonique, puis le soumet à une décantation pour séparer une suspension aqueuse de bicarbonate de sodium, que l'on recueille, et une solution organique de chlorhydrate d'amine (brevet GB-A-1082436 (KAISER ALUMINUM & CHEMICAL CORPORATION), page 2, lignes 105 à 125; Central Patents Index, Basic Abstracts Journal, Section E, Week T.49, Derwent Publication Ltd., Londres, abrégé 78430T-E : demande de brevet JP-A-7241237 (Israël Mining Inds. Inst. Res. & Dev.)).

Dans la suite de la description, l'expression "technique aux amines" désignera cette technique connue de fabrication de bicarbonate de sodium.

On connaît par ailleurs une technique pour la production d'ammoniac par décomposition de chlorure d'ammonium, selon laquelle on mélange une solution aqueuse de chlorure d'ammonium avec une solution organique d'une amine insoluble dans l'eau et un fait circuler un gaz inerte ou de l'anhydride carbonique à travers le mélange résultant pour en évacuer l'ammoniac produit (Central Patents Index, Basic Abstracts Journal, Section E, Week E/14, Derwent Publication Ltd, Londres (Grande-Bretagne), abrégé 26992E/14 : demande de brevet JP-A-57034020 (TOYO SODA MFG K.K.)).

Dans les techniques connues qui viennent d'être décrites, on recueille, à titre de sous-produit, une solution organique de chlorhydrate d'amine qu'il est souhaitable de traiter pour régénérer l'amine. A cet effet, on met en oeuvre un procédé selon lequel on mélange la solution organique de chlorhydrate d'amine avec un agent basique en milieu aqueux, généralement une suspension aqueuse d'oxyde ou d'hydroxyde de calcium ou de magnésium, de manière à produire une solution organique de l'amine régénérée que l'on recueille et une solution aqueuse de chlorure de calcium ou de magnésium qui est rejetée (brevet GB-A-1082436 (KAISER ALUMINUM & CHEMICAL CORPORATION), page 3, lignes 5 à 9; Central Patents Index, Basic Abstracts Journal, Section E, Week T.49, Derwent Publication Ltd, Londres, abrégé 78430T-E : demande de brevet JP-A-7241237 (Israël Mining Inds. Inst. Res. & Dev.)).

En pratique, dans ce procédé connu, la solution aqueuse de chlorure de calcium ou de magnésium contient habituellement des particules de matière solide en suspension, qui lui donnent l'aspect d'un brouet aqueux. Ces particules proviennent généralement de l'agent basique utilisé et peuvent comprendre des particules d'oxyde ou d'hydroxyde de calcium ou de magnésium qui n'ont pas réagi ou des impuretés minérales insolubles de l'agent basique. Il s'est avéré qu'une fraction de l'amine régénérée est perdue dans ce brouet aqueux, où elle forme une pellicule liquide adsorbée à la surface des particules de matière solide minérale.

L'invention vise à remédier à cet inconvénient en fournissant un procédé qui permet de récupérer, de manière efficace, une pellicule liquide contenant une base organique azotée, par exemple une amine, adsorbée à la surface de particules d'une matière minérale solide d'un brouet aqueux.

En conséquence, l'invention concerne un procédé pour extraire un pellicule d'un liquide organique comprenant une base organique azotée insoluble dans l'eau, hors d'un brouet aqueux de particules de matière minérale solide, selon lequel on fait circuler à travers le brouet un gaz inerte vis-à-vis du liquide organique et du brouet.

Dans le procédé selon l'invention, la base organique azotée est, par définition, tout réactif organique azoté insoluble dans l'eau, qui présente un caractère basique suffisant pour réagir avec le chlorure d'hydrogène en formant du chlorhydrate de la base. Le liquide organique peut être constitué par la base organique azotée telle quelle, lorsque celle-ci est normalement liquide dans les conditions d'exécution du procédé. En variante, il peut être une solution de ladite base dans un solvant organique; le cas échéant, le solvant doit être choisi de telle sorte qu'il soit insoluble dans le brouet. En règle générale, il est avantageux de sélectionner la nature et la quantité du solvant de manière que le liquide organique présente une viscosité qui n'excède pas $3.10^{-3}$ Pa.s (3 centipoises), de préférence $1,5.10^{-3}$ Pa.s (1,5 centipoise) dans les conditions d'exécution du procédé. Des exemples de solvants organiques utilisables dans le cadre de l'invention sont le xylène, les butylbenzènes, les méthyléthylbenzènes et plus spécialement le white spirit et les solvants du commerce connus sous les marques ISOPAR (Esso) qui est un mélange d'isoparaffines, SOLVESSO (Esso) qui est un mélange de composés aromatiques, SHELLSOL AB (Shell) qui est un mélange de composés aromatiques et SHELLSOL K qui est un mélange de composés aliphatiques.

Le brouet aqueux consiste en une phase aqueuse contenant des particules de matière minérale solide imprégnées d'une pellicule du liquide organique de la base organique azotée. Le véhicule liquide du brouet peut être de l'eau ou une solution aqueuse. La quantité d'eau ou de solution aqueuse présente dans le brouet n'est pas critique, celui-ci pouvant être indifféremment une suspension diluée ou une boue.

Selon l'invention, on fait circuler un gaz à travers le brouet aqueux. Le gaz doit être choisi parmi ceux qui sont inertes vis-à-vis de la base organique azotée, du solvant de celle-ci, le cas échéant, et des constituants du brouet. Il peut être, par exemple, de l'air, de l'azote, de l'argon ou de la vapeur d'eau. La vapeur d'eau est préférée.

On a observé que le passage du gaz dans le brouet a pour effet de détacher la pellicule de liquide organique des particules de matière minérale et de l'entraîner hors du brouet par un effet de stripping.

La quantité de gaz à mettre en oeuvre dépend de divers paramètres, notamment du volume du brouet, de sa concentration en particules de matière minérale, de sa viscosité, de la nature du liquide organique de la base azotée et de sa teneur dans le brouet, du gaz inerte utilisé, ainsi que de la température et de la pression de travail. Elle peut être déterminée dans chaque cas particulier par un travail de routine au laboratoire.

La température et la pression optimum de travail sont fonction de la tension de vapeur de la base organique azotée et doivent dès lors être déterminées dans chaque cas particulier. Les températures comprises entre 80 et 150°C sont généralement adéquates à la pression atmosphérique, notamment dans le cas où la base organique azotée est une amine.

Toutes autres choses restant égales, le rendement d'extraction de la base organique azotée hors du brouet aqueux est d'autant meilleur que le pH du brouet est élevé. A cet effet, il s'est révélé souhaitable que le pH y soit supérieur à 9, de préférence au moins égal à 10.

Le procédé selon l'invention s'applique à toutes les bases organiques azotées telles que définies plus haut, qui sont insolubles dans le brouet aqueux, par exemple aux imines insolubles dans l'eau et leurs dérivés, aux sels d'ammonium quaternaire insolubles dans l'eau et aux amines et dérivés aminés insolubles dans l'eau; il s'applique spécialement bien aux amines primaires, notamment aux alkylamines primaires comprenant de 12 à 24 atomes de carbone dans la molécule, qui trouvent une utilisation intéressante dans la production de bicarbonate de sodium par la technique aux amines décrite plus haut.

Le procédé selon l'invention s'est révélé spécialement efficace pour le traitement de brouets aqueux contenant des particules de composés de métaux alcalino-terreux, tels que des oxydes, des hydroxydes ou des carbonates de calcium ou de magnésium, notamment des particules de calcaire. Le procédé selon l'invention peut dès lors être combiné avec avantage à la technique aux amines décrite plus haut, où il est alors mis en oeuvre pour récupérer l'amine entraînée dans le brouet aqueux de chlorure de calcium ou de magnésium provenant de la régénération de l'amine.

L'invention concerne dès lors aussi un procédé pour la production de bicarbonate de métal alcalin, selon lequel on traite du chlorure de métal alcalin en présence d'eau avec un gaz contenant de l'anhydride carbonique et une base organique azotée insoluble dans l'eau, on recueille une suspension aqueuse de bicarbonate de métal alcalin et du chlorhydrate de la base organique azotée, on traite la suspension aqueuse pour en séparer le bicarbonate de métal alcalin solide qu'elle contient et une eau mère, on fait réagir le chlorhydrate de la base organique avec un composé de métal alcalino-terreux en présence d'eau, pour régénérer la base organique azotée, on soumet le mélange réactionnel résultant à une décantation et on recueille séparément un liquide organique contenant la base organique azotée régénérée et un brouet aqueux; selon l'invention, on fait circuler un gaz inerte à travers le brouet aqueux, comme exposé plus haut, de manière à entraîner dans le gaz le liquide organique présent dans le brouet.

Des particularités et détails de l'invention vont ressortir de la description suivante des dessins annexés.

La figure 1 représente le schéma général d'une installation pour la production de bicarbonate de sodium selon une forme d'exécution particulière du procédé selon l'invention.

La figure 2 représente le schéma d'une installation de laboratoire utilisée pour illustrer l'intérêt de l'invention.

Dans ces dessins, des mêmes notations de référence désignent des éléments identiques.

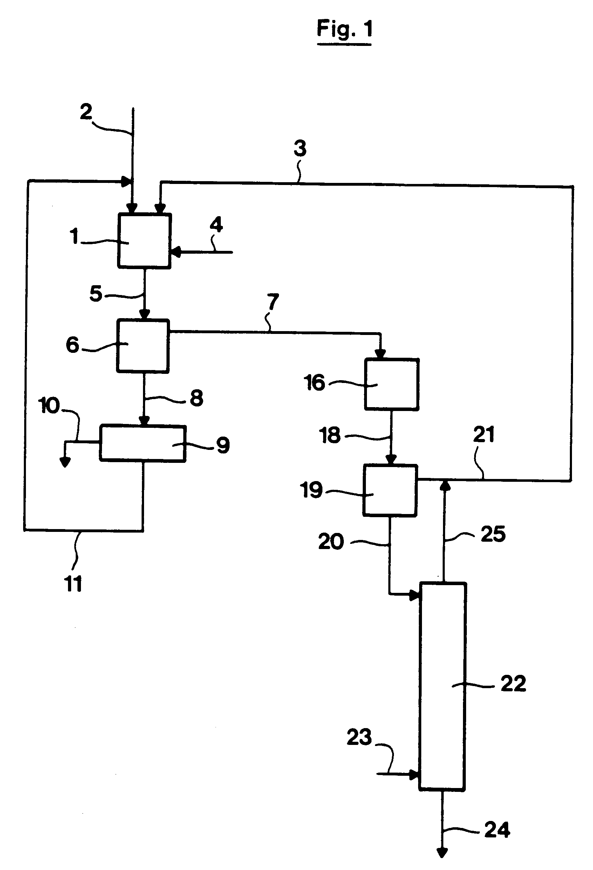

L'installation représentée à la figure 1 comprend une chambre de cristallisation 1 qui est alimentée, de manière continue, avec une solution aqueuse sensiblement saturée de chlorure de sodium ou un brouet aqueux de chlorure de sodium 2, un liquide organique 3 comprenant une amine primaire, insoluble dans la solution aqueuse de chlorure de sodium et un gaz contenant de l'anhydride carbonique 4. Le liquide organique 3 peut par exemple être une solution à 50 % en poids dans du xylène, de l'alkylamine primaire connue sous la marque PRIMENE JMT (Rohm & Haas) qui comprend entre 18 et 24 atomes de carbone dans sa molécule.

En variante, le liquide organique peut être une alkylamine primaire liquide contenant moins de 18 atomes de carbone dans sa molécule, utilisée telle quelle, non dissoute dans un solvant, par exemple l'amine connue sous la marque PRIMENE 81R (Rohm & Haas) dont la molécule contient entre 12 et 14 atomes de carbone.

Le gaz 4 est de préférence un gaz riche en anhydride carbonique, contenant au moins 60 % en poids d'anhydride carbonique.

Dans la chambre de cristallisation 1, du bicarbonate de sodium cristallise et l'amine est convertie en chlorhydrate d'amine.

On soutire de la chambre de cristallisation 1, un liquide 5 constitué d'un mélange de cristaux de bicarbonate de sodium, d'une eau mère de la cristallisation et d'une phase organique comprenant du chlorhydrate d'amine. Le liquide 5 est transféré dans une chambre de décantation 6, où on sépare, par gravité, la phase organique de chlorhydrate d'amine 7 et un brouet aqueux 8. Ce dernier est envoyé dans un dispositif d'essorage ou de filtration 9, où on recueille séparément le bicarbonate de sodium solide 10 et l'eau mère 11. Celle-ci est recyclée dans la chambre de cristallisation 1 après qu'on y ait ajouté du chlorure de sodium. Le bicarbonate de sodium solide 10 peut être envoyé dans un four de calcination, non représenté, pour produire du carbonate de sodium.

La phase organique de chlorhydrate d'amine 7 est traitée pour régénérer l'amine. A cet effet elle est introduite dans une chambre de réaction 16 où elle est traitée avec une suspension aqueuse d'hydroxyde de calcium ou avec de l'eau et du calcaire broyé comme exposé dans le document FR-A-2556719 (SOLVAY & Cie).

On soutire hors de la chambre de réaction 16 un mélange liquide 18 comprenant l'amine régénérée et une solution aqueuse de chlorure de calcium. Ce mélange 18 est transféré dans une chambre de décantation 19, où s'opère la séparation d'un brouet aqueux 20 et d'un liquide organique 21 comprenant de l'amine régénérée. Le liquide organique 21 est recyclé dans la chambre de cristallisation 1.

Le brouet aqueux 20 est formé d'une solution aqueuse de chlorure de calcium contenant, en suspension, des particules de matière minérale solide. Celles-ci comprennent par exemple des particules de calcaire, éventuellement d'oxyde ou d'hydroxyde de calcium et d'impuretés habituellement présentes dans le calcaire telles que de la silice, des silicates, de l'alumine, de la magnésie et des oxydes de fer. Le brouet aqueux 20 contient en outre une fraction de l'amine régénérée, dont une partie au moins est à l'état d'une pellicule liquide adsorbée à la surface des particules de matière minérale.

Conformément à l'invention, le brouet aqueux 20 est introduit dans une colonne 22 où on le fait circuler de haut en bas, à contre-sens d'un courant ascendant de vapeur d'eau 23. On évacue le brouet en 24, au pied de la colonne, et le courant de vapeur d'eau 25 sortant en tête de la colonne est envoyé dans le courant de l'amine régénérée 21, pour être recyclé avec elle dans la chambre de cristallisation 1.

Dans une variante, non représentée, du procédé qui vient d'être décrit, le courant de vapeur d'eau 25, ou une fraction de celui-ci, est envoyé dans l'eau mère 11. Celle-ci peut ensuite être recyclée telle quelle dans la chambre de cristallisation 1 ou traitée au préalable avec une fraction au moins de la phase organique de chlorhydrate d'amine 7, comme décrit dans la demande de brevet français FR-A-2551428 (SOLVAY & Cie).

L'exemple dont la description va suivre sert à illustrer l'invention.

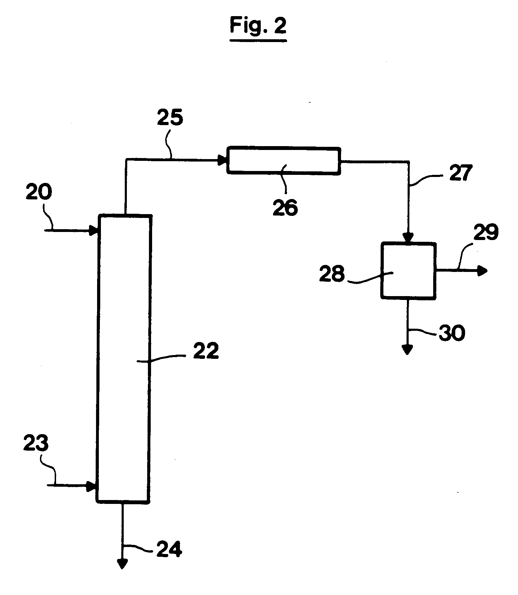

On a procédé à un essai d'application du procédé selon l'invention dans l'installation de laboratoire schématisée à la figure 2. Cette installation comprenait une colonne de stripping 22 de 150 mm de diamètre intérieur, équipée de plateaux et présentant une capacité utile de 53 1. On a traité dans cette installation un brouet aqueux obtenu après traitement de chlorhydrate de l'amine PRIMENE 81R (mélange d'alkylamines primaires contenant de 12 à 14 atomes de carbone dans la molécule) avec une suspension aqueuse d'hydroxyde de calcium et séparation, par décantation, de l'amine produite. Le brouet a ainsi consisté, pour l'essentiel, en une solution aqueuse de chlorure de calcium contenant des particules de matière minérale solide en suspension.

On a introduit simultanément dans la colonne 22 le brouet 20 à traiter et un courant de vapeur d'eau 23. Après leurs passages respectifs à contre-courant dans la colonne, le brouet et le gaz ont été recueillis respectivement en 24 et en 25. Le gaz 25 a été condensé dans un réfrigérant 26 et le condensat résultant 27 a été envoyé dans un décanteur 28 d'où l'on a soutiré une phase organique 29 et une phase aqueuse 30.

Le tableau qui suit fournit les conditions opératoires de l'essai et les compositions respectives du brouet 20 soumis à l'essai, du brouet 24 à l'issue de l'essai et des phases organique 29 et aqueuse 30.

4

| | Brouet (20) | Vapeur d'eau (23) | Brouet (24) | Phase organi- que (29) | Phase aqueuse (30) |
|---|---|---|---|---|---|
| Température (°C) | 95 | 110 | 110 | 25 | 25 |
| Débit (kg/h) | 35,1 | 5,7 | 39,2 | 0,084 | 1,75 |
| Composition : | | | | | |
| Cl$^-$ (éq/kg) | 3,44 | | 3,09 | | |
| Ca$^{++}$ (éq/kg) | 3,16 | | 2,82 | | |
| OH$^-$ (éq/kg) | 0,025 | | 0,014 | | |
| CaCl$_2$ (g/kg) | 175 | | 157 | | |
| Amine (g/kg) | 2,61 | | ⟨ 0,065 | 953 | 5,8 |
| H$_2$O (g/kg) | 803,4 | 1000 | 826 | 47 | 94,2 |
| Matière minérale solide (g/kg) | 19 | | 17 | | |

## Revendications

1. Procédé pour l'extraction d'une pellicule d'un liquide organique comprenant une base organique azotée insoluble dans l'eau, adsorbée à la surface de particules de matière minérale dans un brouet aqueux (20), caratérisé en ce qu'on fait circuler à travers le brouet (20), un gaz (23) inerte vis-à-vis du liquide organique et du brouet, pour détacher la pellicule de liquide organique des particules et l'entrainer hors du brouet.

2. Procédé selon la revendication 1, caractérisé en ce que le gaz (23) est de la vapeur d'eau.

3. Procédé selon la revendication 1 ou 2, caractérisé en ce qu'on réalise dans le brouet (20) un pH au moins égal à 10.

4. Procédé selon l'une quelconque des revendications 1 à 3, caractérisé en ce qu'il est appliqué à l'extraction d'une amine insoluble dans l'eau.

5. Procédé selon la revendication 4, caractérisé en ce qu'il est appliqué à l'extraction d'une alkylamine primaire.

6. Procédé selon l'une quelconque des revendications 1 à 5, caractérisé en ce qu'on met en oeuvre un brouet aqueux (20) contenant des particules d'oxyde de métal alcalino-terreux et/ou d'hydroxyde de métal alcalino-terreux et/ou de carbonate de métal alcalino-terreux.

7. Procédé selon la revendication 6, caractérisé en ce qu'on met en oeuvre un brouet aqueux (20) séparé d'un mélange réactionnel (18) obtenu par traitement de chlorhydrate d'une amine insoluble dans l'eau (7) avec une suspension aqueuse d'oxyde, d'hydroxyde ou de carbonate de métal alcalino-terreux.

8. Procédé pour la production de bicarbonate de métal alcalin, selon lequel on traite du chlorure de métal alcalin (2) en présence d'eau avec un gaz' contenant de l'anhydride carbonique (4) et une base

5

organique azotée insoluble dans l'eau (3), on recueille une suspension aqueuse de bicarbonate de métal alcalin (8) et du chlorhydrate de la base organique azotée (7), on traite la suspension aqueuse (8) pour en séparer le bicarbonate de métal alcalin solide (10) qu'elle contient et une eau mère (11), on fait réagir le chlorhydrate de la base organique (7), avec un composé de métal alcalino-terreux en présence d'eau (16), pour régénérer la base organique azotée, on soumet le mélange réactionnel résultant (18) à une décantation (19) et on recueille séparément un liquide organique contenant la base organique azotée régénérée (21) et un brouet aqueux (20), caractérisé en ce qu'on fait circuler à travers le brouet aqueux (20), un gaz (23) inerte vis-à-vis du liquide organique et du brouet, conformément au procédé selon l'une quelconque des revendications 1 à 7.

9.  Procédé selon la revendication 8, caractérisé en ce qu'on fait circuler le gaz (23) successivement à travers le brouet aqueux (20), et dans l'eau mère (11).

## Claims

1.  Process for the extraction of a film of an organic liquid containing a water-insoluble nitrogenous organic base adsorbed onto the surface of particles of inorganic material in an aqueous slurry (20), characterised in that a gas (23) which is inert towards the organic liquid and towards the slurry is passed through the slurry (20) to detach the organic liquid film from the particles and drive it out of the slurry.

2.  Process according to Claim 1, characterised in that steam is the gas (23).

3.  Process according to Claim 1 or 2, characterised in that a pH at least equal to 10 is produced in the slurry (20).

4.  Process according to any one of Claims 1 to 3, characterised in that it is applied to the extraction of a water-insoluble amine.

5.  Process according to Claim 4, characterised in that it is applied to the extraction of a primary alkylamine.

6.  Process according to any one of Claims 1 to 5, characterised in that an aqueous slurry (20) containing particles of alkaline earth metal oxide and/or alkaline earth metal hydroxide and/or alkaline earth metal carbonate is employed.

7.  Process according to Claim 6, characterised in that an aqueous slurry (20) separated from a reaction mixture (18) obtained by treating the hydrochloride of a water-insoluble amine (7) with an aqueous suspension of alkaline earth metal oxide, hydroxide or carbonate is employed.

8.  Process for the production of alkali metal bicarbonate, according to which alkali metal chloride (2) is treated in the presence of water with a gas containing carbon dioxide (4) and a water-insoluble nitrogenous organic base (3), an aqueous suspension of alkali metal bicarbonate (8) and hydrochloride of the nitrogenous organic base (7) are recovered, the aqueous suspension (8) is treated in order to separate the solid alkali metal bicarbonate (10) it contains and a mother-liquor (11), the organic base hydrochloride (7) is reacted with an alkaline earth metal compound in the presence of water(16), in order to regenerate the nitrogenous organic base, the resulting reaction mixture (18) is subjected to a phase separation (19) and an organic liquid containing the regenerated nitrogenous organic base (21) and an aqueous slurry (20) are collected separately, characterised in that a gas (23) which is inert towards the organic liquid and towards the slurry is passed through the aqueous slurry (20), in accordance with the process according to any one of Claims 1 to 7.

9.  Process according to Claim 8, characterised in that the gas (23) is passed successively through the aqueous slurry (20) and into the mother-liquor (11).

## Patentansprüche

1.  Verfahren zur Extraktion einer Schicht einer organischen Flüssigkeit, die eine wasserunlösliche, stickstoffhaltige organische Base enthält, die an der Oberfläche von mineralischen Teilchen in einer wässrigen Suspension (20) adsorbiert ist, dadurch gekennzeichnet, daß man durch die Suspension (20) ein gegenüber der organischen Flüssigkeit und der Suspension inertes Gas (23) zirkulieren läßt, um die Schicht der organischen Flüssigkeit von den Teilchen loszulösen und diese aus der Suspension zu leiten.

2. Verfahren nach Anspruch 1, dadurch gekennzeichnet, daß das Gas (23) Wasserdampf ist.

3. Verfahren nach Anspruch 1 oder 2, dadurch gekennzeichnet, daß man in der Suspension (20) einen pH von wenigstens gleich 10 herstellt.

4. Verfahren nach einem der Ansprüche 1 bis 3, dadurch gekennzeichnet, daß es zur Extraktion eines wasserunlöslichen Amins verwendet wird.

5. Verfahren nach Anspruch 4, dadurch gekennzeichnet, daß es zur Extraktion eines primären Alkylamins verwendet wird.

6. Verfahren nach einem der Ansprüche 1 bis 5, dadurch gekennzeichnet, daß man eine wässrige suspension (20) einsetzt, die Erdalkalimetalloxyd- und/oder Erdalkalimetallhydroxyd- und/oder Erdalkalimetallcarbonat-Teilchen enthält.

7. Verfahren nach Anspruch 6, dadurch gekennzeichnet, daß man eine wässrige Suspension (20) einsetzt, die von einer durch Behandlung von Chlorhydrat eines wasserunlöslichen Amins (7) mit einer wässrigen Suspension eines Oxids, eines Hydroxids oder eines Carbonats eines Erdalkalimetalls erhaltenen Reaktionsmischung (18) getrennt wurde.

8. Verfahren zur Herstellung von Alkalimetallbicarbonat, gemäß dem man Alkalimetallchlorid (2) in Anwesenheit von Wasser mit einem Kohlensäureanhydrid (4) enthaltenden Gas und einer wasserunlöslichen, stickstoffhaltigen organischen Base (3) behandelt, eine wässrige Suspension von Alkalimetallbicarbonat (8) und das Chlorhydrat der stickstoffhaltigen organischen Base (7) erhält, die wässrige Suspension (8) behandelt, um das feste Alkalimetallbicarbonat (10), das diese enthält, und eine Mutterlauge (11) davon zu trennen, man das Chlorhydrat der organischen Base (7) mit einer Erdalkalimetallverbindung in Anwesenheit von Wasser (16) reagieren läßt, um die stickstoffhaltige organische Base zurückzugewinnen, die resultierende Reaktionsmischung (18) einer Dekantierung (19) unterzieht und getrennt eine die zurückgewonnene, stickstoffhaltige organische Base (21) enthaltende organische Flüssigkeit und eine wässrige Suspension (20) erhält, dadurch gekennzeichnet, daß man durch die wässrige Suspension (20) ein gegenüber der organischen Flüssigkeit und der Suspension inertes Gas (23) zirkulieren läßt, gemäß dem Verfahren nach einem der Ansprüche 1 bis 7.

9. Verfahren nach Anspruch 8, dadurch gekennzeichnet, daß man das Gas (23) nacheinander durch die wässrige Suspension (20) und in der Mutterlauge (11) zirkulieren läßt.

7

## Fig. 1

## Fig. 2